# EUROPEAN PATENT APPLICATION

(11) **EP 4 787 671 A1**
(43) Date of publication of application: **05.08.2026**
(21) Application number: 26153272.5
(22) Date of filing: 21.01.2026
(51) Int. Cl.: H02K 1/20, H02K 3/24, H02K 5/20, H02K 9/19, H02K 1/18

(54) **MOTOR UNIT**

(30) Priority: 31.01.2025 JP 2025015059
(71) Applicant: Toyota Jidosha Kabushiki Kaisha, Toyota-shi, Aichi-ken 471-8571 (JP)
(72) Inventor: USAMI, Kazuaki, Toyota-shi, Aichi-ken 471-8571 (JP); OHTA, Kei, Toyota-shi, Aichi-ken 471-8571 (JP); YAMATO, Fumiaki, Toyota-shi, Aichi-ken 471-8571 (JP); MANABE, Hideki, Toyota-shi, Aichi-ken 471-8571 (JP); ASAOKA, Hironori, Toyota-shi, Aichi-ken 471-8571 (JP); SUZUKI, Yasunori, Toyota-shi, Aichi-ken 471-8571 (JP); OHIRA, Kengo, Toyota-shi, Aichi-ken 471-8571 (JP)
(74) Representative: Cabinet Beau de Loménie

(57) **Abstract**

A motor unit includes: a housing (20); a stator core (46) that is an annular body, housed in the housing (20) and extending along an axial direction; and a first connection member (24) provided between a first end surface (46A) at one end of the stator core (46) and a first surface (30B) of the housing (20). The housing (20) includes a first housing flow passage (34) with a first housing opening (34B) on the first surface (30B). The first housing flow passage (34) is for a refrigerant. The stator core (46) includes a stator flow passage (52B) extending from a first stator opening (46C) on the first end surface (46A) to a second stator opening (46D) on a second end surface (46B). The first connection member (24) includes a first connection flow passage (66A) that provides communication between the first housing opening (34B) and the first stator opening (46C).

## Description

### BACKGROUND OF THE INVENTION

### 1. Field of the Invention

A technology disclosed in the present specification relates to a motor unit.

### 2. Description of Related Art

Japanese Unexamined Patent Application Publication No. 2022-118472 (JP 2022-118472 A) discloses a motor unit including a housing and a stator core that is an annular body, that is housed in the housing, and that extends along an axial direction.

### SUMMARY OF THE INVENTION

The motor unit in JP 2022-118472 A further includes a cooling pipe that extends along the axial direction. The cooling pipe is disposed above the stator core. A motor is cooled by a refrigerant that flows through the cooling pipe.

The present specification provides a novel effective technology for cooling the motor unit.

In a first aspect of the technology, a motor unit may include: a housing; a stator core that is an annular body, the stator core being housed in the housing and extending along an axial direction; and a first connection member provided between a first end surface that is positioned at one end of the stator core in the axial direction and a first surface of the housing that faces the first end surface. The housing may include a first housing flow passage that has a first housing opening on the first surface. The first housing flow passage may be a flow passage for a refrigerant. The stator core may include a stator flow passage that extends from a first stator opening on the first end surface, to a second stator opening on a second end surface that is positioned at the other end of the stator core in the axial direction. The first connection member may include a first connection flow passage that provides communication between the first housing opening of the first housing flow passage and the first stator opening of the stator flow passage.

In the above configuration, the refrigerant flows through the first housing flow passage, the first connection flow passage, and the stator flow passage. Thereby, the motor unit can be cooled.

As a second aspect, in the first aspect, the motor unit may further include a stator coil that is provided at the stator core. The stator coil may include a first coil end that protrudes from the first end surface of the stator core. The first connection member may include at least one first jet flow passage that branches from the first connection flow passage and through which the refrigerant is supplied toward the first coil end.

The first coil end tends to generate heat easily. In the above configuration, the refrigerant jetted from the first jet flow passage is jetted toward the first coil end. Accordingly, the first coil end can be directly cooled.

As a third aspect, in the first or second aspect, the at least one first jet flow passage may include a plurality of first jet flow passages different from each other in a direction in which the refrigerant is jetted.

In the above configuration, various sites on the first coil end can be directly cooled.

As a fourth aspect, in the third aspect, the refrigerant may be jetted through the first jet flow passages, toward sites on the first coil end that are different from each other with respect to the axial direction.

In the above configuration, various sites on the first coil end can be directly cooled.

As a fifth aspect, in any one of the second to fourth aspects, the stator flow passage may be provided at an upper portion of the stator core.

In the above configuration, the refrigerant jetted from the first jet flow passage is more likely to come into contact with the first coil end. Accordingly, the first coil end can be surely cooled.

As a sixth aspect, in any one of the first to fifth aspects, the motor unit may further include a second connection member provided between the second end surface and a second surface of the housing that faces the second end surface. The housing may further include a second housing flow passage that has a third housing opening on the second surface. The second connection member may include a second connection flow passage that provides communication between the third housing opening of the second housing flow passage and the second stator opening of the stator flow passage.

In the above configuration, the refrigerant flows through the first housing flow passage, the first connection flow passage, the stator flow passage, the second connection flow passage, and the second housing flow passage. Thereby, the motor unit can be cooled.

As a seventh aspect, in the sixth aspect, the motor unit may further include a stator coil that is provided at the stator core. The stator coil may include a second coil end that protrudes from the second end surface of the stator core. The second connection member may include at least one second jet flow passage that branches from the second connection flow passage and through which the refrigerant is jetted toward the second coil end.

The second coil end tends to generate heat easily. In the above configuration, the refrigerant jetted from the second jet flow passage is jetted toward the second coil end. Accordingly, the second coil end can be directly cooled.

As an eighth aspect, in any one of the first to seventh aspects, the stator core may include a main body portion that has a cylindrical shape and a protrusion portion that protrudes from an outer circumference surface of the main body portion to a radial-directional outer side. The protrusion portion may be provided with the stator flow passage.

In the above configuration, the influence on the magnetic property of the stator core can be reduced.

As a ninth aspect, in the above eighth aspect, the protrusion portion may be further provided with a fixation hole by which the stator core is fixed to the housing.

In the above configuration, the stator core can be easily formed compared to a configuration in which the fixation hole and the stator flow passage are provided at different protrusion portions.

As a tenth aspect, in the ninth aspect, the diameter of the stator flow passage may be smaller than the diameter of the fixation hole.

In the above configuration, the size of the protrusion portion can be decreased.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of a drive device 2;
FIG. 2 is a diagram of a stator core 46 as viewed from an axial-directional one side;
FIG. 3 is a diagram showing a fixation portion between the stator core 46 and a first housing 30;
FIG. 4 is a perspective view showing a first connection member 24, a second connection member 26, and the stator core 46;
FIG. 5 is an enlarged view of the first connection member 24; and
FIG. 6 is a schematic diagram of a drive device 202.

### DETAILED DESCRIPTION OF EMBODIMENTS

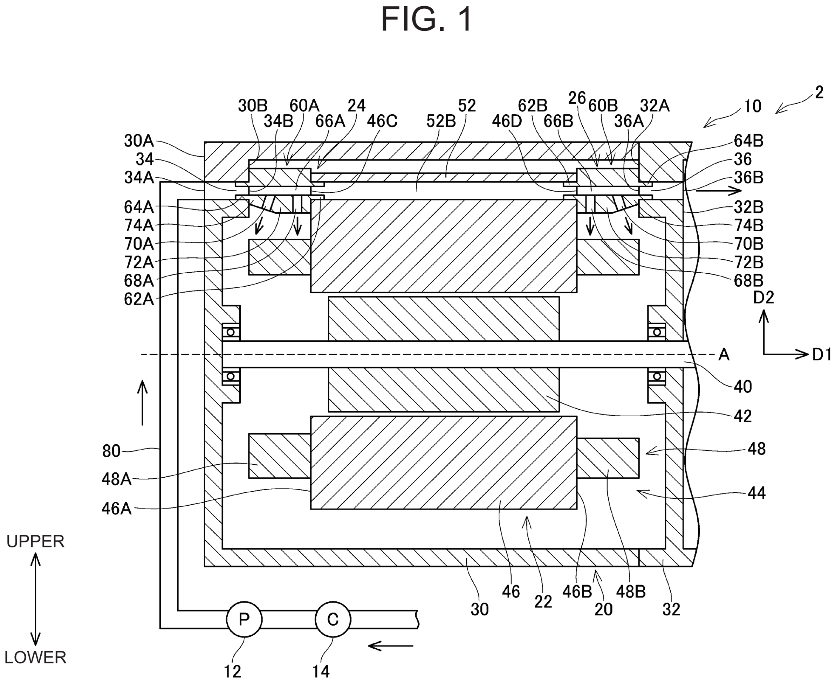

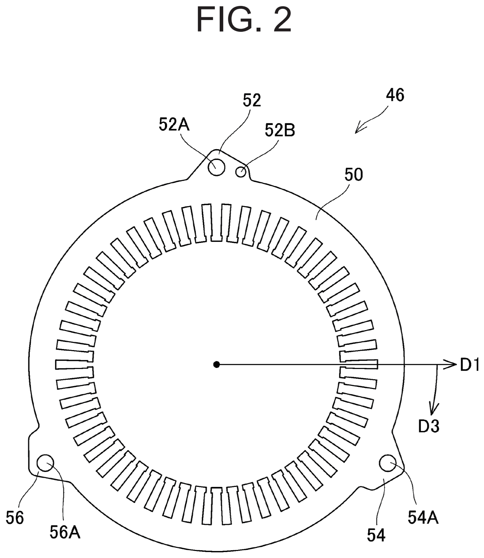

A drive device 2 will be described with reference to FIG. 1 to FIG. 5. The drive device 2 is equipped in an electrified vehicle or the like. In the present specification, a cylindrical coordinate system having an axial direction D1, a radial direction D2, and a circumferential direction D3 (see FIG. 2) is defined on the basis of a rotation axis A of a motor 22. The axial direction D1 is a direction parallel to the rotation axis A of the motor 22, and the coordinate axis is defined on the rotation axis. The radial direction D2 is a direction perpendicular to the axial direction D1, and is defined as a coordinate axis for which the origin is on the rotation axis A. Moreover, the circumferential direction D3 in FIG. 2 is a direction perpendicular to the axial direction D1 and the radial direction D2, and is defined as a coordinate axis that circles around the rotation axis A. Further, an up-down direction in a state where the drive device 2 is equipped in the electrified vehicle roughly coincides with the up-down direction in FIG. 1. Further, a right-left direction in the state where the drive device 2 is equipped in the electrified vehicle can be different from the right-left direction in FIG. 1. However, hereinafter, to facilitate understanding, the description of the drawings will be sometimes performed on the basis of the right-left direction in FIG. 1. Further, hereinafter, the left side in FIG. 1 is referred to as "one side in the axial direction D1", and the right side in FIG. 1 is referred to as "the other side in the axial direction D1". Furthermore, one side in the axial direction D1 and the other side in the axial direction D1 are referred to as an "axial-directional one side" and an "axial-directional other side", respectively.

As shown in FIG. 1, the drive device 2 includes a motor unit 10, a gear unit (not illustrated), an oil pump 12, and an oil cooler 14. The gear unit is provided on the axial-directional other side of the motor unit 10.

The motor unit 10 includes a housing 20, a motor 22, a first connection member 24, and a second connection member 26.

The housing 20 includes a first housing 30 and a second housing 32. The axial-directional other side of the first housing 30 is opened. The second housing 32 is connected to an end portion of the first housing 30 on the axial-directional other side.

The first housing 30 includes a supply flow passage 34. The supply flow passage 34 extends along the axial direction D1 between a first housing opening 34A on an outer surface 30A of the first housing 30 and a second housing opening 34B on an inner surface 30B of the first housing 30. The outer surface 30A is a surface of the first housing 30 on the axial-direction one side. The inner surface 30B is a surface of the first housing 30 on the axial-direction other side.

The second housing 32 includes a collection flow passage 36. The collection flow passage 36 extends along the axial direction D1 between a third housing opening 36A on a surface 32A of the second housing 32 on the axial-directional one side and a fourth housing opening 36B on a surface 32B of the second housing 32 on the axial-directional other side. The first housing opening 34A, the second housing opening 34B, the third housing opening 36A, and the fourth housing opening 36B are provided at an upper portion of the housing 20.

The motor 22, the first connection member 24, and the second connection member 26 are housed in the housing 20. The motor 22 includes a shaft 40, a rotor 42, and a stator 44. The shaft 40 extends along the rotation axis A. The rotation axis A is the rotation center of the shaft 40. The shaft 40 is supported in the housing 20 by a bearing, in a rotatable manner. The rotor 42 is fixed to the shaft 40.

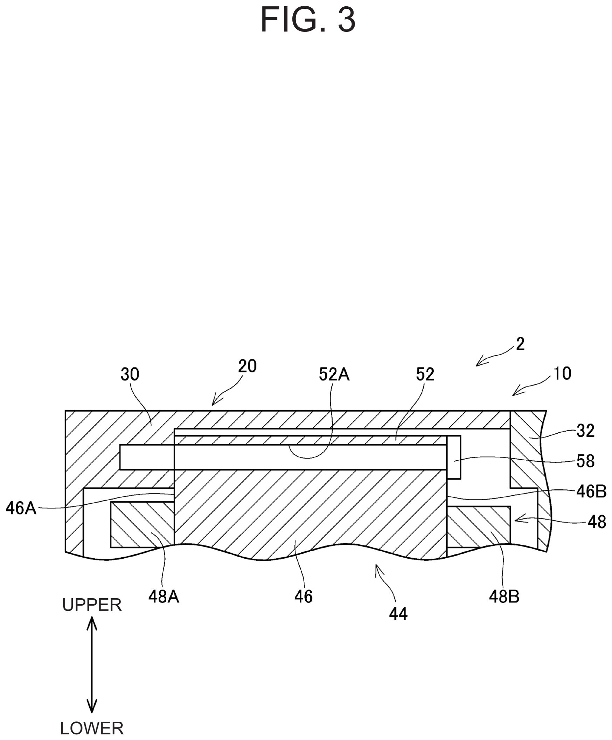

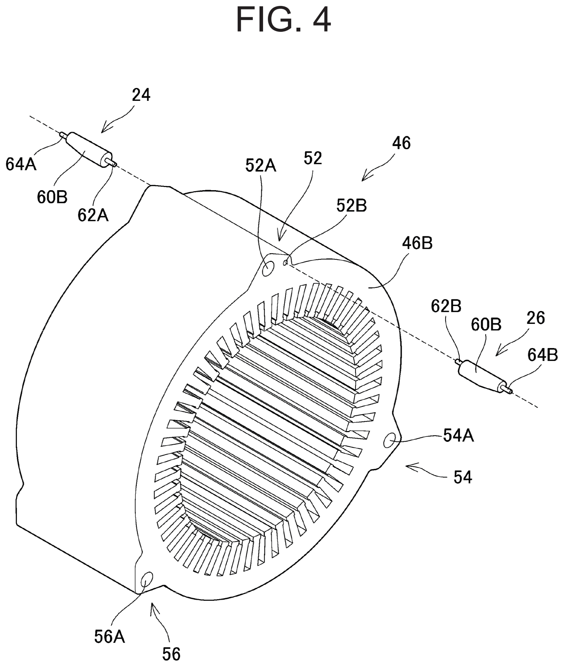

The stator 44 includes a stator core 46 and a stator coil 48. As shown in FIG. 4, the stator core 46 is an annular body that extends along the axial direction D1. The stator core 46 is constituted by a plurality of magnetic steel sheets laminated in the axial direction D1. As shown in FIG. 1, the stator core 46 has a first end surface 46A on the axial-directional one side and a second end surface 46B on the axial-directional other side. As shown in FIG. 2, the stator core 46 includes a main body portion 50 that has a cylindrical shape and three protrusion portions 52, 54, 56 that protrude from an outer circumference surface of the main body portion 50 to a radial-directional outer side. The protrusion portions 52, 54, 56 are arrayed at regular intervals in the circumferential direction D3. The protrusion portion 52 is provided at an upper portion of the stator core 46. The protrusion portions 52, 54, 56 include fixation holes 52A, 54A, 56A. As shown in FIG. 3, the fixation holes 52A, 54A, 56A are through-holes that extend along the axial direction D1. The fixation holes 52A, 54A, 56A are holes by which the stator core 46 is fixed to the housing 20 through fastening members 58. The protrusion portion 52 in FIG. 2 further includes a stator flow passage 52B. As shown in FIG. 1, the stator flow passage 52B extends along the axial direction D1, from a first stator opening 46C on a first end surface 46A to a second stator opening 46D on a second end surface 46B. As shown in FIG. 2, the diameter of the stator flow passage 52B is smaller than the diameter of the fixation holes 52A, 54A, 56A.

The stator coil 48 in FIG. 1 is wound around the stator core 46. The stator coil 48 includes a first coil end 48A and a second coil end 48B. The first coil end 48A protrudes from the first end surface 46A of the stator core 46 to the axial-directional one side. The second coil end 48B protrudes from the second end surface 46B of the stator core 46 to the axial-directional other side.

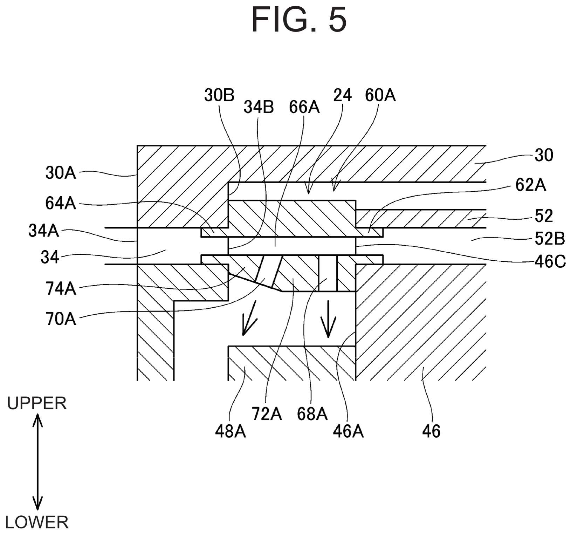

As shown in FIG. 5, the first connection member 24 is provided between the first end surface 46A of the stator core 46 and the inner surface 30B of the first housing 30 that faces the first end surface 46A. The first connection member 24 is disposed above the first coil end 48A of the stator core 46. The first connection member 24 includes a first main body portion 60A, a pair of first insertion portions 62A, 64A, a first connection flow passage 66A, and a plurality of first jet flow passages 68A, 70A. The first main body portion 60A includes a right-side main body portion 72A and a left-side main body portion 74A. The right-side main body portion 72A has a column shape that extends along the axial direction D1. The diameter of the right-side main body portion 72A is larger than the diameter of the stator flow passage 52B. An end surface of the right-side main body portion 72A on the axial-directional other side abuts on the first end surface 46A of the stator core 46. The left-side main body portion 74A extends from an end portion of the right-side main body portion 72A on the axial-directional one side, to the axial-directional one side. An upper half of the left-side main body portion 74A has a semicircular column shape, and a lower half of the left-side main body portion 74A has an outer shape that is inclined so as to get close to the central axis of the first main body portion 60A while extending from the axial-directional other side to the axial-directional one side. The shape of an end portion of the left-side main body portion 74A on the axial-directional other side is the same as the shape of an end portion of the right-side main body portion 72A on the axial-directional one side. The outer shape of an end portion of the left-side main body portion 74A on the axial-directional one side is larger than the outer shape of the supply flow passage 34 of the first housing 30, as viewed along the axial direction D1. An end surface of the left-side main body portion 74A on the axial-directional one side abuts on the inner surface 30B of the first housing 30.

Each of the first insertion portions 62A, 64A has a column shape that extends along the axial direction D1. The first insertion portion 62A extends from an end portion of the first main body portion 60A on the axial-directional other side, to the axial-directional other side. The first insertion portion 62A is inserted into the stator flow passage 52B of the stator core 46. The diameter of the first insertion portion 62A is roughly the same as the diameter of the stator flow passage 52B. An outer surface of the first insertion portion 62A abuts on a wall surface of the stator core 46 that demarcates the stator flow passage 52B. The first insertion portion 64A extends from an end portion of the right-side main body portion 72A on the axial-directional one side, to the axial-directional one side. The first insertion portion 64A is inserted into the supply flow passage 34 of the first housing 30. The diameter of the first insertion portion 64A is roughly the same as the diameter of the supply flow passage 34. An outer surface of the first insertion portion 64A abuts on a wall surface of the first housing 30 that demarcates the supply flow passage 34.

The first connection flow passage 66A extends along the axial direction D1, at a central portion of the first connection member 24. The first connection flow passage 66A extends from an end surface of the first insertion portion 62A on the axial-directional other side, to an end surface of the first insertion portion 64A on the axial-directional one side. That is, the first connection flow passage 66A passes through the first connection member 24 in the axial direction D1. The diameter of the first connection flow passage 66A is smaller than the diameter of the stator flow passage 52B and the diameter of the supply flow passage 34. The first connection member 24 provides communication between the second housing opening 34B of the supply flow passage 34 and the first stator opening 46C of the stator flow passage 52B.

The first jet flow passages 68A, 70A branch from the first connection flow passage 66A. The first jet flow passage 68A branches from the first connection flow passage 66A at the right-side main body portion 72A. The first jet flow passage 68A extends in the radial direction D2, that is, in the up-down direction. The first jet flow passages 70A branches from the first connection flow passage 66A at the left-side main body portion 74A. The first jet flow passage 70A extends in a direction that is inclined with respect to the up-down direction. The first jet flow passages 68A, 70A are provided such that extended lines of the central axes of the respective flow passages cross the first coil end 48A. In this way, the first jet flow passages 68A, 70A are different from each other in a direction in which oil flows. Specifically, the oil jetted from the first jet flow passage 68A and the oil jetted from the first jet flow passage 70A move toward sites on the first coil end 48A that are different from each other with respect to the axial direction D1.

As shown in FIG. 1, the second connection member 26 is provided between the second end surface 46B of the stator core 46 and the surface 32A of the second housing 32 that is on the axial-directional one side and that faces the second end surface 46B. The second connection member 26 is disposed above the second coil end 48B of the stator core 46. The second connection member 26 and the first connection member 24 are bilaterally symmetrical. A second main body portion 60B, a pair of second insertion portions 62B, 64B, a second connection flow passage 66B, second jet flow passages 68B, 70B, a left-side main body portion 72B, and a right-side main body portion 74B correspond to the first main body portion 60A, the first insertion portions 62A, 64A, the first connection flow passage 66A, the first jet flow passages 68A, 70A, the right-side main body portion 72A, and the left-side main body portion 74A, respectively. An end surface of the left-side main body portion 72B on the axial-directional one side abuts on the second end surface 46B of the stator core 46. An end surface of the right-side main body portion 74B on the axial-directional other side abuts on the surface 32A of the second housing 32 on the axial-directional one side. An outer surface of the second insertion portion 62B abuts on a wall surface of the stator core 46 that demarcates the stator flow passage 52B. An outer surface of the second insertion portion 64B abuts on a wall surface of the second housing 32 that demarcates the collection flow passage 36. The second connection member 26 provides communication between the third housing opening 36A of the collection flow passage 36 and the second stator opening 46D of the stator flow passage 52B. The oil jetted from the second jet flow passage 68B and the oil jetted from the second jet flow passage 70B move toward sites on the second coil end 48B that are different from each other with respect to the axial direction D1.

An external flow passage 80 is connected to the first housing opening 34A of the first housing 30. The external flow passage 80 is provided with the oil pump 12 and the oil cooler 14. The external flow passage 80 provides communication between the first housing opening 34A and an oil retention portion (not illustrated).

The flow of the oil that flows through the drive device 2 will be described. By the drive of the oil pump 12, the oil retained at the oil retention portion is suctioned into the external flow passage 80. The oil suctioned into the external flow passage 80 passes through the oil cooler 14, and thereby, is cooled. The oil cooled by the oil cooler 14 passes through the supply flow passage 34 of the first housing 30, and is supplied to the first connection flow passage 66A of the first connection member 24. Some of the oil supplied to the first connection flow passage 66A is jetted from the first jet flow passages 68A, 70A toward the first coil end 48A. Thereby, the first coil end 48A is directly cooled. Further, the rest of the oil supplied to the first connection flow passage 66A passes through the stator flow passage 52B, and is supplied to the second connection flow passage 66B of the second connection member 26. The stator core 46 is cooled by the oil that passes through the stator flow passage 52B. Some of the oil supplied to the second connection flow passage 66B is jetted from the second jet flow passages 68B, 70B toward the second coil end 48B. Thereby, the second coil end 48B is directly cooled. Further, the rest of the oil supplied to the second connection flow passage 66B passes through the collection flow passage 36 of the second housing 32, and is supplied to the gear unit and others.

In the embodiment, the oil cooled by the oil cooler 14 is supplied to the motor unit 10, before the gear unit and others. That is, on the flow passage for the oil, the motor unit 10 is disposed on the upstream side of the gear unit and others. In this configuration, the motor unit 10 can be further cooled compared to a configuration in which the motor unit 10 is disposed on the downstream side of the gear unit and others.

As described above, the motor unit 10 includes the housing 20, the stator core 46 that is an annular body, that is housed in the housing 20, and that extends along the axial direction D1, and the first connection member 24 provided between the first end surface 46A that is positioned at one end of the stator core 46 in the axial direction D1 and the inner surface 30B (an example of "the first surface of the housing") of the first housing 30 that faces the first end surface 46A. The housing 20 includes the supply flow passage 34 (an example of "the first housing flow passage") for the oil (an example of "the refrigerant") that has the second housing opening 34B on the inner surface 30B. The stator core 46 includes the stator flow passage 52B that extends from the first stator opening 46C (an example of "the first opening") on the first end surface 46A to the second stator opening 46D (an example of "the second opening") on the second end surface 46B. The first connection member 24 includes the first connection flow passage 66A that provides communication between the second housing opening 34B of the supply flow passage 34 and the first stator opening 46C of the stator flow passage 52B.

In the above configuration, the oil flows through the supply flow passage 34, the first connection flow passage 66A, and the stator flow passage 52B. Thereby, the motor unit 10 can be cooled.

The motor unit 10 further includes the stator coil 48 that is provided at the stator core 46. The stator coil 48 includes the first coil end 48A that protrudes from the first end surface 46A of the stator core 46. The first connection member 24 includes the first jet flow passages 68A, 70A that branch from the first connection flow passage 66A and through which the oil is supplied toward the first coil end 48A.

The first coil end 48A tends to generate heat easily. In the above configuration, the oil jetted from the first jet flow passages 68A, 70A is jetted toward the first coil end 48A. Accordingly, the first coil end 48A can be directly cooled.

The first jet flow passages 68A, 70A are different from each other in the direction in which the oil is jetted.

In the above configuration, various sites on the first coil end 48A can be directly cooled.

The oil is jetted through the first jet flow passages 68A, 70A, toward sites on the first coil end 48A that are different from each other with respect to the axial direction D1.

In the above configuration, various sites on the first coil end 48A can be directly cooled.

The stator flow passage 52B is provided at the upper portion of the stator core 46.

In the above configuration, the oil jetted from the first jet flow passages 68A, 70A is more likely to come into contact with the first coil end 48A. Accordingly, the first coil end 48A can be surely cooled.

The motor unit 10 further includes the second connection member 26 provided between the second end surface 46B and the surface 32A (an example of "the second surface of the housing") of the second housing 32 that is on the axial-directional one side and that faces the second end surface 46B. The housing 20 further includes the collection flow passage 36 (an example of "the second housing flow passage") that has the third housing opening 36A on the surface 32A of the second housing 32 on the axial-directional one side. The second connection member 26 includes the second connection flow passage 66B that provides communication between the third housing opening 36A of the collection flow passage 36 and the second stator opening 46D of the stator flow passage 52B.

In the above configuration, the oil flows through the supply flow passage 34, the first connection flow passage 66A, the stator flow passage 52B, the second connection flow passage 66B, and the collection flow passage 36. Thereby, the motor unit 10 can be cooled.

The motor unit 10 further includes the stator coil 48 that is provided at the stator core 46. The stator coil 48 includes the second coil end 48B that protrudes from the second end surface 46B of the stator core 46. The second connection member 26 includes the second jet flow passages 68B, 70B that branch from the second connection flow passage 66B and through which the oil is jetted toward the second coil end 48B.

The second coil end 48B tends to generate heat easily. In the above configuration, the oil jetted from the second jet flow passages 68B, 70B is jetted toward the second coil end 48B. Accordingly, the second coil end 48B can be directly cooled.

The stator core 46 includes the main body portion 50 that has a cylindrical shape and the protrusion portion 52 that protrudes from the outer circumference surface of the main body portion 50 to the radial-directional outer side. The protrusion portion 52 is provided with the stator flow passage 52B.

In the above configuration, the influence on the magnetic property of the stator core 46 can be reduced.

The protrusion portion 52 is further provided with the fixation hole 52A by which the stator core 46 is fixed to the housing 20.

In the above configuration, the stator core 46 can be easily formed compared to a configuration in which the fixation hole 52A and the stator flow passage 52B are provided at different protrusion portions.

The diameter of the stator flow passage 52B is smaller than the diameter of the fixation holes 52A.

In the above configuration, the size of the protrusion portion 52 can be decreased.

As described above, in the embodiment, the oil flows in the stator core 46. Therefore, it is not necessary to provide, for example, a cooling pipe through which the oil flows, on the outside of the stator core 46 in the radial direction D2. In this configuration, the drive device 2 can be downsized compared to a configuration in which the above cooling pipe is included. Further, in the case of the configuration in which the above cooling pipe is included, it is necessary to adjust the length of the cooling pipe, and others, depending on the length of the stator 44 in the axial direction D1, and others. In the embodiment, the first connection member 24 and the second connection member 26 can be commonly used among different kinds of drive devices.

Specific examples of the technology disclosed in the present specification have been described above in detail. They are just examples, and do not limit the claims. The technology disclosed in the claims includes various modifications and alterations of the specific examples described above.

### First Modification

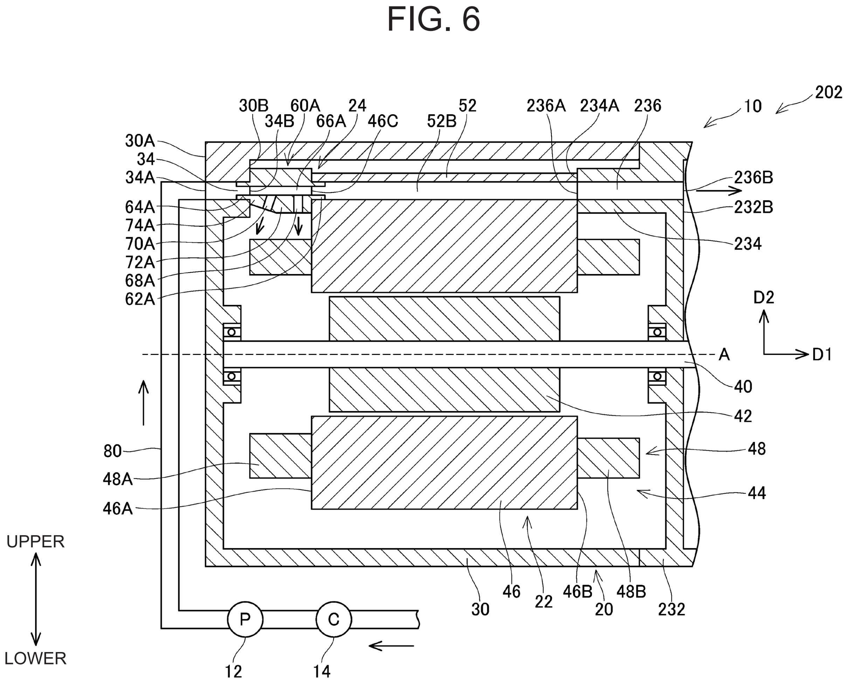

The drive device may exclude one of the first connection member 24 and the second connection member 26. A drive device 202 that does not include the second connection member will be described with reference to FIG. 6. Constitutions in common with the embodiment are denoted by identical reference characters, and descriptions thereof are omitted.

As shown in FIG. 6, a second housing 232 includes a protrusion portion 234 that protrudes to the axial-directional one side, and a collection flow passage 236. The collection flow passage 236 extends along the axial direction D1 between a third housing opening 236A on a surface 234A of the protrusion portion 234 of the second housing 232 on the axial-directional one side and a fourth housing opening 236B on a surface 232B of the second housing 232 on the axial-directional other side. The surface 234A of the protrusion portion 234 on the axial-directional one side abuts on the second end surface 46B of the stator core 46. The collection flow passage 236 directly communicates with the stator flow passage 52B of the stator core 46. In the modification, the second housing 232 may include one or more jet flow passages that branch from the collection flow passage 236. The oil jetted from the one or more jet flow passages moves toward the second coil end 48B.

In the case of a drive device that does not include the first connection member, the supply flow passage 34 of the first housing 30 may directly communicate with the stator flow passage 52B of the stator core 46. In the present modification, the second connection member 26 is an example of "the first connection member".

### Second Modification

The supply flow passage 34, the collection flow passage 36, and the stator flow passage 52B do not need to extend along the axial direction D1. As an example, a level difference or the like may be provided among the supply flow passage 34, the collection flow passage 36, and the stator flow passage 52B.

### Third Modification

In the embodiment, the oil flows through the stator flow passage 52B from the axial-directional one side to the axial-directional other side. The oil may flow through the stator flow passage 52B from the axial-directional other side to the axial-directional one side. In the present modification, the collection flow passage is the flow passage of the first housing 30, and the supply flow passage is the flow passage of the second housing 32.

### Fourth Modification

The jet flow passage may be included in only one of the first connection member 24 and the second connection member 26. Further, the jet flow passage may be excluded in both of the first connection member 24 and the second connection member 26.

### Fifth Modification

The first connection member 24 may include one first jet flow passage, or may include three or more first jet flow passages. Further, the second connection member 26 may include one second jet flow passage, or may include three or more second jet flow passages.

### Sixth Modification

The direction in which the oil is jetted may be the same between the first jet flow passages 68A, 70A. Further, the direction in which the oil is jetted may be the same between the second jet flow passages 68B, 70B.

### Seventh Modification

The first jet flow passages 68A, 70A may jet the oil toward an identical site on the first coil end 48A with respect to the axial direction D1. Further, the second jet flow passages 68B, 70B may jet the oil toward an identical site on the second coil end 48B with respect to the axial direction D1.

### Eighth Modification

The second connection member 26 and the first connection member 24 may be bilaterally asymmetrical.

### Ninth Modification

The stator core 46 may exclude the protrusion portion. In the present modification, the stator flow passage 52B is provided at the main body portion 50 of the stator core 46. In the present modification, the stator 44 is fixed to the housing 20 by press fitting or the like.

### Tenth Modification

The fixation hole 52A and the stator flow passage 52B may be provided at different protrusion portions.

### Eleventh Modification

The diameter of the stator flow passage 52B may be the same as the diameter of the fixation hole 52A, or may be larger than the diameter of the fixation hole 52A.

### Twelfth Modification

The first connection member 24 may exclude the first insertion portions 62A, 64A. In the present modification, the diameter of the first connection flow passage 66A may be the same as the diameter of the supply flow passage 34 and the diameter of the stator flow passage 52B. In the present modification, the motor unit 10 may include a positioning portion for performing the positioning of the first connection flow passage 66A and the supply flow passage 34 and a positioning portion for performing the positioning of the first connection flow passage 66A and the stator flow passage 52B. As an example, each positioning portion is constituted by a protrusion portion and a concave portion corresponding to the protrusion portion. The same applies to the second connection member 26.

Each of the technical elements described in the present specification or the drawings exerts technical usefulness alone or in various combinations, and is not limited to the combinations described in the claims at the time of the filing. Moreover, the technology illustrated in the present specification or the drawings can achieve a plurality of objects at the same time, and has technical usefulness simply by achieving one of the objects.

## Claims

1. A motor unit comprising:
a housing (20);
a stator core (46) that is an annular body, the stator core (46) being housed in the housing (20) and extending along an axial direction; and
a first connection member (24) provided between a first end surface (46A) that is positioned at one end of the stator core (46) in the axial direction and a first surface (30B) of the housing (20) that faces the first end surface (46A), wherein:
the housing (20) includes a first housing flow passage (34) that has a first housing opening (34B) on the first surface (30B), the first housing flow passage (34) being a flow passage for a refrigerant;
the stator core (46) includes a stator flow passage (52B) that extends from a first stator opening (46C) on the first end surface (46A), to a second stator opening (46D) on a second end surface (46B) that is positioned at the other end of the stator core (46) in the axial direction; and
the first connection member (24) includes a first connection flow passage (66A) that provides communication between the first housing opening (34B) of the first housing flow passage (34) and the first stator opening (46C) of the stator flow passage (52B).

2. The motor unit according to claim 1, further comprising a stator coil (48) that is provided at the stator core (46), wherein:
the stator coil (48) includes a first coil end (48A) that protrudes from the first end surface (46A) of the stator core (46); and
the first connection member (24) includes at least one first jet flow passage (68A, 70A) that branches from the first connection flow passage (66A) and through which the refrigerant is jetted toward the first coil end (48A).

3. The motor unit according to claim 2, wherein the at least one first jet flow passage (68A, 70A) includes a plurality of first jet flow passages (68A, 70A) different from each other in a direction in which the refrigerant is jetted.

4. The motor unit according to claim 3, wherein the refrigerant is jetted through the first jet flow passages (68A, 70A), toward sites on the first coil end (48A) that are different from each other with respect to the axial direction.

5. The motor unit according to any of claims 2 to 4, wherein the stator flow passage (52B) is provided at an upper portion of the stator core (46).

6. The motor unit according to any of claims 1 to 5, further comprising a second connection member (26) provided between the second end surface (46B) of the stator core (46) and a second surface (32A) of the housing (20) that faces the second end surface (46B), wherein:
the housing (20) further includes a second housing flow passage (36) that has a third housing opening (36A) on the second surface (32A); and
the second connection member (26) includes a second connection flow passage (66B) that provides communication between the third housing opening (36A) of the second housing flow passage (36) and the second stator opening (46D) of the stator flow passage (52B).

7. The motor unit according to claim 6, further comprising a stator coil (48) that is provided at the stator core (46), wherein:
the stator coil (48) includes a second coil end (48B) that protrudes from the second end surface (46B) of the stator core (46); and
the second connection member (26) includes at least one second jet flow passage (68B, 70B) that branches from the second connection flow passage (66B) and through which the refrigerant is jetted toward the second coil end (48B).

8. The motor unit according to any of claims 1 to 7, wherein:
the stator core (46) includes a main body portion (50) that has a cylindrical shape and a protrusion portion (52) that protrudes from an outer circumference surface of the main body portion to a radial-directional outer side; and
the protrusion portion (52) is provided with the stator flow passage (52B).

9. The motor unit according to claim 8, wherein the protrusion portion (52) is further provided with a fixation hole (52A) by which the stator core (46) is fixed to the housing (20).

10. The motor unit according to claim 9, wherein a diameter of the stator flow passage (52B) is smaller than a diameter of the fixation hole (52A).
